# EUROPEAN PATENT SPECIFICATION

(11) **EP 1 415 879 B1**
(45) Date of publication and mention of the grant of the patent: **28.12.2005**
(21) Application number: 03024936.1
(22) Date of filing: 29.10.2003
(51) Int. Cl.: B60T 11/20, B29C 45/00, B60T 11/16

(54) **Resin piston for center-valve-type hydraulic master cylinder and molding die therefor**
Kunststoffkolben für hydraulischen Geberzylinder mit Zentralventil und Gussform hierfür
Piston en matière plastique pour maître cylindre hydraulique à soupape centrale et moule associé

(30) Priority: 29.10.2002 JP 2002314284
(43) Date of publication of application: 06.05.2004
(73) Proprietor: NISSIN KOGYO CO., LTD., Ueda-shi, Nagano-ken (JP)
(72) Inventor: Kanai, Atsushi, Nissin Kogyo Co., Ltd., Chiisagata-gun, Nagano 389-0514 (JP)
(74) Representative: HOFFMANN EITLE

(56) References cited:
- EP-A- 1 203 706
- DE-A- 3 932 248
- FR-A- 2 817 190
- PATENT ABSTRACTS OF JAPAN vol. 2000, no. 09, 13 October 2000 (2000-10-13) -& JP 2000 159088 A (BOSCH BRAKING SYSTEMS CO LTD), 13 June 2000 (2000-06-13)

## Description

### BACKGROUND OF THE INVENTION

### 1. Field of the Invention

The present invention relates to a resin piston for a center-valve-type hydraulic master cylinder used as a hydraulic pressure generating source of a hydraulic brake or a hydraulic clutch for use in a four-wheeled vehicle and the like.

### 2. Description of the Related Art

A resin piston for a center-valve-type hydraulic master cylinder is liquid-tight and movably inserted into a bottomed cylinder hole formed in the hydraulic master cylinder to thereby define a hydraulic pressure chamber between the leading end face of the piston and the bottom portion of the cylinder hole; in the middle portion of the piston, there is formed a guide hole so as to penetrate through the piston middle portion in the radial direction thereof, while a guide pin to be disposed so as to cross the cylinder hole can be inserted into the guide hole; in the portion of the piston that is situated on the hydraulic pressure chamber side, there is formed a valve storage hole for a center valve so as to penetrate through such piston portion in the axial direction of the piston; and, the valve storage hole allows the hydraulic pressure chamber and guide hole to communicate with each other.

The valve storage hole comprises a valve chamber opened on the hydraulic-pressure-chamber side thereof and a stem hole opened on the guide-hole side thereof. A valve seal of the center valve is stored in the valve chamber, while a valve stem of the center valve is inserted into the stem hole. When the hydraulic master cylinder is not in operation, the leading end of the valve stem projecting from the stem hole into the guide hole is contacted with the guide pin, and the valve seal is separated from the valve seat of the bottom wall of the valve chamber, thereby allowing a supply oil chamber formed in the outer periphery of the guide hole to communicate with the hydraulic pressure chamber. On the other hand, when the hydraulic master cylinder is in operation, the valve seal of the center valve is seated on the valve seat of the valve chamber bottom wall to thereby cut off communication between the supply oil chamber and hydraulic pressure chamber, and operating liquid, the pressure of which is increased in the interior of the hydraulic pressure chamber due to the forward movement of the piston, is supplied to a hydraulic brake or a hydraulic clutch (for example, see JP-A-2000-159088).

By the way, the above resin piston can be molded by pouring molten resin into a cavity in a molding mold. In this molding operation, however, a guide hole molding core for molding the guide hole and a valve storage hole molding core for molding the valve storage hole are butted against each other on the hydraulic pressure side surface of the guide hole; and, therefore, when molding the resin piston, burrs are generated in the periphery of the guide-hole side opening portion of the stem hole and, in case where these burrs are pushed by the guide pin and are thereby moved into the stem hole, there arises a fear that the sliding performance of the center valve can be impaired.

EP-A- 1 203 706 discloses the combination of features of the preamble of claim 1.

### SUMMARY OF THE INVENTION

The present invention aims at eliminating the drawbacks found in the above-mentioned conventional resin piston. Accordingly, it is an object of the present invention to provide a resinpiston for a center-valve-type hydraulicmaster cylinder which, even in case where burrs are generated in the periphery of the opening portion of the stem hole when molding the resin piston, can prevent the sliding performance of the center valve from being impaired.

In attaining the above object, according to a first aspect of the present invention, there is provided a resin piston as claimed in claim 1.

Preferred optional features are described in the dependent claims.

The present invention also provides or molding die for such a resin piston for a center-valve-type hydraulic master cylinder.

### BRIEF DESCRIPTION OF THE DRAWINGS

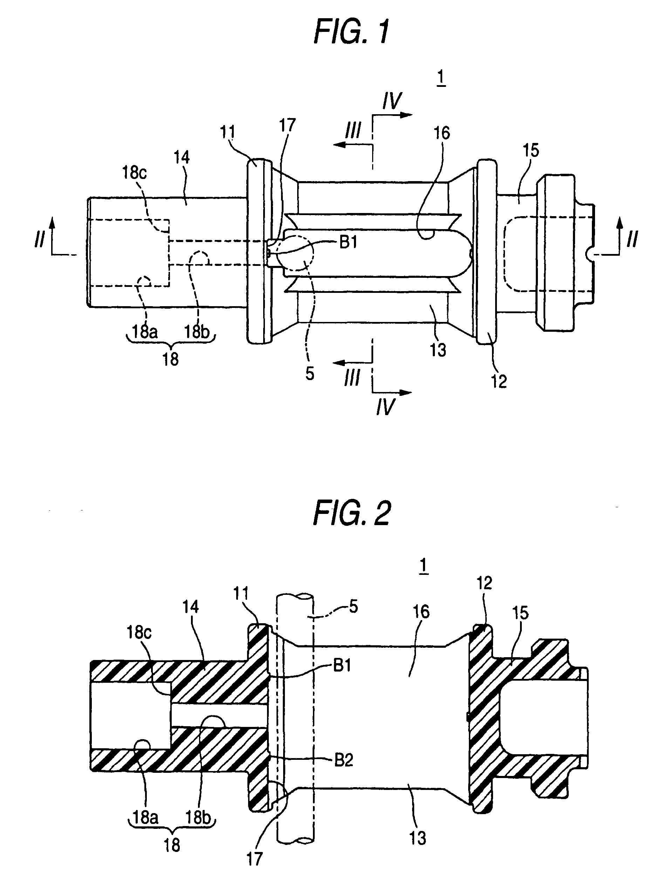

Fig. 1 is a plan view of a piston according to an embodiment of the present invention;
Fig. 2 is a section view, taken along the line II-II shown in Fig. 1;

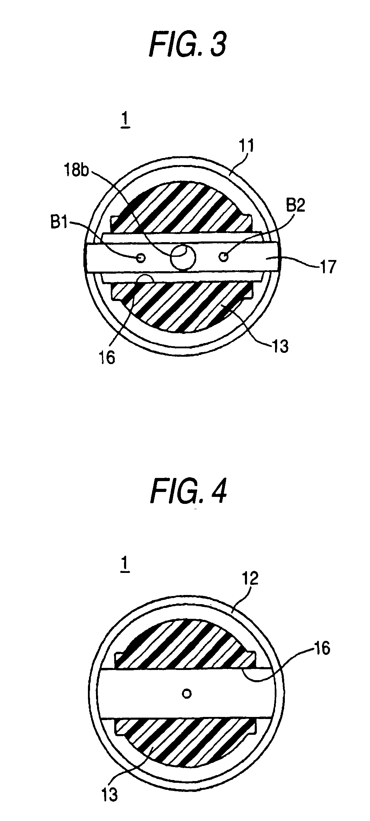

Fig. 3 is a section view, taken along the line III-III shown in Fig. 1;
Fig. 4 is a section view, taken along the line IV-IV shown in Fig. 1;

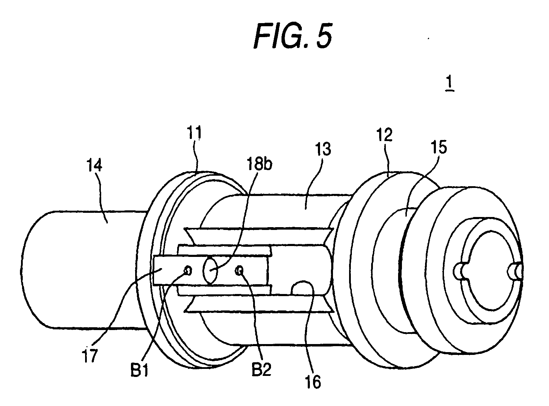

Fig. 5 is a perspective view of a piston according to an embodiment of the present invention;
Fig. 6 is a section view of the piston according to the embodiment of the present invention, showing its molding state; and,

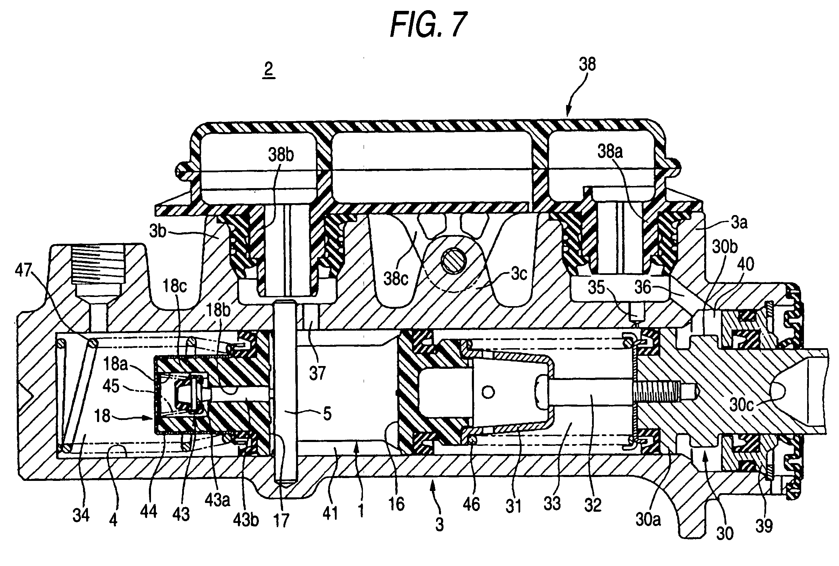

Fig. 7 is a section view of a center-valve-type hydraulic master cylinder with the piston mounted thereon.

### DETAILED DESCRIPTION OF THE PREFERRED EMBODIMETNS

Now, description will be given below in detail of an embodiment in which a resin piston according to the present invention is applied to a secondary piston of a tandem-type hydraulic master cylinder, with reference to the accompanying drawings.

Referring to the structure of a secondary piston 1, two flange portions 11 and 12 each having a large diameter are disposed on the outer peripheries of the middle portion of the secondary piston 1, and a middle shaft portion 13 is formed between the two flange portions 11 and 12; and, a leading end side shaft portion 14 is formed on the leading end side of the flange portion 11, while a rear end side shaft portion 15 is formed on the rear end side of the flange portion 12. In the middle portion 13, there formed a guide hole 16 and a recessed groove 17 in such a manner that they penetrate through the middle portion 13 in the radial direction of the secondary piston 1; and, in the leading end side shaft portion 14, there is formed a valve storage hole 18 so as to penetrate through the leading end side shaft portion 14 in the axial direction of the secondary piston 1.

Into the guide hole 16, there can be inserted a guide pin 5 which, when the secondary piston 1 is inserted into a bottomed cylinder hole 4 opened up in a cylindrical-shaped cylinder body 3 of a center-valve-type hydraulicmaster cylinder 2, is set so as to cross the cylinder hole 4 in the diameter direction thereof. The guide pin 5 and guide hole 16 cooperate together in preventing the secondary piston 1 from rotating in the peripheral direction thereof and also in allowing the secondary piston 1 to move in the cylinder axial direction.

The recessed groove 17 is formed on the valve storage hole 18 side of the guide hole 16 so as to be continuous with this guide hole 16. However, the recessed groove 17 is formed so as to have a width smaller than the diameter of the guide pin 5, so that the guide pin 5 is allowed to move with respect to the guide hole 16 only in the interior of the guide hole 16. The valve storage hole 18 comprises a large-diameter valve chamber 18a opened in a second hydraulic pressure chamber 34 (which will be discussed later) and a small-diameter stem hole 18b opened in the recessed groove 17 so as to be continuous with the valve chamber 18a, while the valve storage hole 18 allows the second hydraulic pressure chamber 34 and guide hole 16 to communicate with each other.

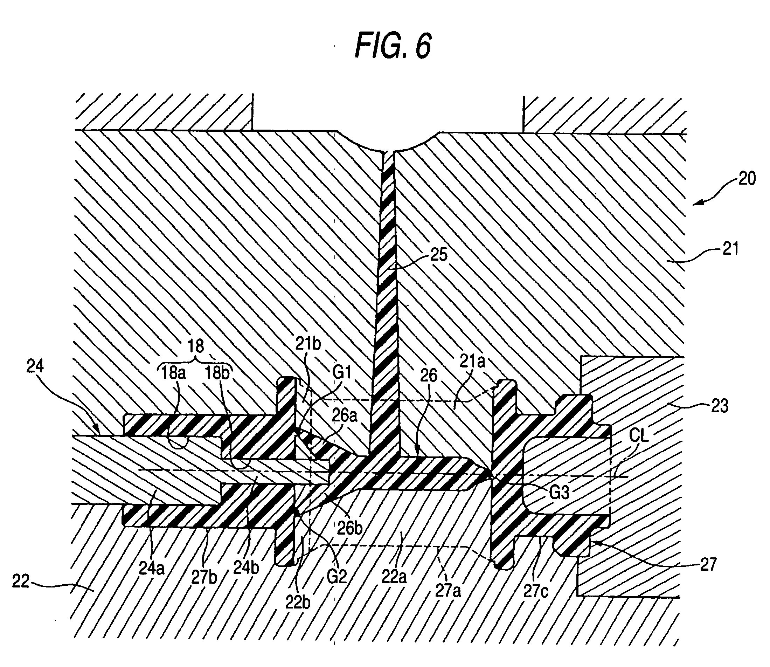

The secondary piston 1 can be integrally molded of synthetic resin as a whole using a molding mold 20 shown in Fig. 6. The molding mold 20 comprises an upper mold 21, a lower mold 22, a right mold 23 and a valve storage hole molding core 24; and, on the upper mold 21 and lower mold 22, there are integrally disposed guide hole molding cores 21a and 22a in such a manner that they are projected from their associated upper and lower molds 21 and 22. The guide hole molding cores 21a and 22a respectively include, on the valve storage molding core 24 side thereof, projecting portions 21b and 22b which are used to form the recessed groove 17. Also, the valve storage hole molding core 24 comprises a valve chamber forming portion 24a having a large diameter and a stem hole forming portion 24b having a small diameter, while the stem hole forming portion 24b is set larger in length than the stem hole 18b. In the interior portions of the upper mold 21 and guide hole molding core 21a, there is formed a vertical runner 25; and, in the butting surfaces of the guide hole molding cores 21a and 22a, there is formed a horizontal runner 26 which communicates with the vertical runner 25.

In case where the upper mold 21, lower mold 22, right mold 23 and valve storage hole molding core 24 are butted against each other, there can be formed a cavity 27 for molding a piston. In the case of the cavity 27, the butting surfaces of the guide hole molding cores 21a and 22a provide a piston center axis CL, the peripheries of the mutually butted guide hole molding cores 21a and 22a provide a middle shaft portion forming portion 27a, the left side of the middle shaft portion forming portion 27a provides a leading end side shaft portion forming portion 27b, and the right side of the middle shaft portion forming portion 27a provides a rear end side shaft portion forming portion 27c. Also, the valve storage hole molding core 24 is structured such that the leading end of the stem hole forming portion 24b thereof is projected into the interior portions of the guide hole molding cores 21a and 22a.

The leading end side shaft portion forming portion 27b side of the horizontal runner 26 provides two tapered inclined runners 26a and 26b which branch in upward and downward directions with the valve storage hole molding core 24 between them. The leading end portions of the two inclined runners 26a and 26b are opened in the hydraulic pressure chamber side surfaces of the projecting portions 21b and 22b for formation of the recessed groove 17 in such a manner that they are spaced outwardly from the valve storage hole core 24, while these two opening portions are disposed as pouring gates G1 and G2. The rear end side shaft portion forming portion 27c side of the horizontal runner 26 is opened in the counter-hydraulic-pressure-chamber side surfaces of the guide hole molding cores 21a and 22a on the piston center axis CL, and this openingportion is disposed as a pouring gate G3.

Molten resin poured from the vertical runner 25 flows into the central portion of the horizontal runner 26 and branches to the right and left, the thus-branched portions of the molten resin are respectively loaded from the pouring gates G1 and G2 into the leading end side shaft portion forming portion 27b to thereby mold the flange portion 11 and leading end side shaft portion 14; the molten resin is also poured from the pouring gate G3 into the rear end side shaft portion forming portion 27c to thereby mold the flange portion 12 and rear end side shaft portion 15; and, the above two kinds of molten resin are further poured respectively from the two forming portions 27b and 27c into the middle shaft portion forming portion 27a and join together there to thereby mold the middle shaft portion 13.

And, after completion of the molding operation, in case where the upper mold 21, lower mold 22, right mold 23 and valve storage hole molding core 24 are separated from each other, there are formed the guide hole 16 and valve storage hole 18; and, the molten resin, which is solidified in the interiors of the vertical runner 25 and horizontal runner 26, remains as a surplus material 28. In the periphery of the guide-hole-16 side opening portion of the stem hole 17b, there are generated burrs, because the leading end portion of the stem hole forming portion 24b of the valve storage hole molding core 24 is disposed so as to project into the guide hole 16. Also, since the surplus material 28 is cut off by a machining blade which is inserted along the two end portions of the guide hole 16, there are left some burrs B1 and B2 in the pouring gates G1 and G2.

The thus-molded secondary piston 1 is inserted together with a primary piston 30 into the cylinder hole 4 of the center-valve-type hydraulic master cylinder 2, and, by connecting the secondary piston to the primary piston 30 using a retainer 31 and a guide pin 32, a first hydraulic pressure chamber 33 is defined between the primary piston 30 and secondary piston 1, and a second hydraulic pressure chamber 34 is defined between the secondarypiston 1 and the bottom wall of the cylinder hole 4, thereby constituting the two-system tandem-type hydraulic master cylinder 2 capable of supplying hydraulic pressures, which are respectively generated in the first and second hydraulic pressure chambers 33 and 34, to two hydraulic pressure systems.

A first boss portion 3a and a second boss portion 3b are respectively provided on and projected from the upper portion of the cylinder body 3 and, between these two boss portions 3a and 3b, there is projectingly disposed a connecting arm 3c. A relief port 35 and a supply port 36 are formed in the bottom wall of the first boss portion 3a and a communicating hole 37 is formed in the bottom wall of the second boss portion 3b, while the two ports 35, 36 and the communicating hole 37 are respectively in communication with the cylinder hole 4. With the first and second boss portions 3a and 3b of the cylinder body 3, there are respectively fitted the oil supply pipes 38a and 38b of a reservoir union 38 which is connected to a reservoir (not shown); and, the connecting arm 3c of the cylinder body 3 and the connecting arm 38c of the reservoir union 38 are connected together using bolts, whereby the reservoir unit 38 can be integrally connected to the upper portion of the cylinder body 3.

In the case of the primary piston 30, a large-diameter flange portion 30a and a medium-diameter flange portion 30b are disposed on the outer periphery of the leading end side of the primary piston 30, while the leading end side of the primary piston 30 is stored into the cylinder hole 4 in such a manner that themedium-diameter flange portion 30b is prevented against removal using a frame member 39. Also, in the rear end of the primary piston 30, there is opened up an engaging hole 30c, while the leading end of an output rod of a booster (not shown) is stored into the engaging hole 30c.

Between the large-diameter flange portion 30a of the primary piston 30 and frame member 39, there is defined a first oil supply chamber 40, while the outer periphery space portion of the middle shaft portion 1c of the secondary piston 1 provides a second oil supply chamber 41. The first oil supply chamber 40 communicates with the reservoir union 38 through a supply port 36, while the second oil supply chamber 41 communicates with the reservoir union 38 through a communication hole 42.

A center valve 43 is stored in the valve storage hole 18. The center valve 43 is composed of a head portion, that is, a valve seal 43 to be stored into the valve chamber 18a and a valve stem 43b to be inserted into the stem hole 18b; and, the center valve 43 is energized in the direction of the guide hole 16 due to the spring force of a spring 45 compressibly interposed between the center valve 43 and a retainer 44 which is mounted on the second hydraulic pressure chamber 34 side of the secondary piston 1. The valve stem 43b is formed so as to have such a length that, when the valve seal 43a is seated on the valve seat 18c of the valve chamber 18a due to the spring force of the spring 45, the leading end of the valve stem 43b can project out from the recessed groove 17.

Therefore, the burrs generated in the periphery of the guide-hole-16 side opening portion of the stem hole 18b are pushed out to the recessed groove 17 by the valve stem 43b which is inserted into the stem hole 18b from the second hydraulic pressure chamber 34 and, therefore, there is no fear that the burrs can bite into between the stem hole 18b and valve stem 43b.

Between the primary piston 30 and secondary piston 1, there is compressibly interposed a first return spring 46 and, between the secondary piston 1 and the bottom wall of the cylinder hole 4, there is compressibly interposed a second return spring 47 having a higher set load than the first return spring 46. The retreating limit of the secondary piston 1 by the spring force of the second spring 47 when not in operation is restricted by the mutual contact between the guide pin 5 and valve stem 43b. Also, the retreating limit of the primary piston 30 by the spring forces of the two return springs 46 and 47 when not in operation is restricted by the mutual contact between the medium-diameter flange portion 30b and frame member 39.

In case where a driver operates the output rod of the booster to thereby push and move the primary piston 30, only the primarypiston 30, while compressing the first return spring 46 in the first hydraulic pressure chamber 33, advances in the bottom portion direction of the cylinder hole 4 and closes the relief port 35 to thereby generate hydraulic pressure in the interior of the first hydraulic pressure chamber 33. In case where, as the primary piston 30 advances further, the first return spring 46 gradually increases its spring force and the spring force of the first return spring 46 exceeds the set load of the second return spring 47, the secondary piston 1 starts its advancing motion in the direction of the bottom portion of the cylinder hole 4, the valve stem 43b is separated from the guide piston 5, and the valve seal 43a of the center valve 43 is seated on the valve seat 18c of the valve chamber 18a to close the stem hole 18b, thereby generating a hydraulic pressure in the interior of the secondhydraulic pressure chamber 34.

In case where the driver removes his or her operation and thus the primary piston 30 and secondary piston 1 are retreated due to the spring forces of the two return springs 46 and 47, the leading end of the secondary piston 1 is contacted with the guide pin 5 and the valve seal 43a of the center valve 43 is separated from the valve seat 18c of the valve chamber 18a; and, after then, the guide pin 5 is contacted with the recessed groove 17 of the guide hole 16 to thereby restrict the retreating limit of the secondary piston 1.

Since the burrs generated in the periphery of the opening portion of the stem hole 18b and the burrs B1, B2 generated in the traces of the pouring gates G1, G2 are situated within the recessed groove 17, in the above-mentioned retreating limit restricting time, there is no possibility that the guide pin 5 can be contacted with the burrs B1, B2. Therefore, there is eliminated a fear that the burrs B1 in the periphery of the opening portion of the stem hole 18b can be curved by the guide pin 5 and can be thereby moved into the step hole 18b side, which in turn can prevent the sliding performance of the valve stem 43b reciprocating within the stem hole 18b from being impaired. Also, because the burrs B1 and 82 in the traces of the pouring gates G1 and G2 are situated at positions spaced from the opening of the stem hole 18b, there is no fear that the burrs B1 and B2 can impair the sliding performance of the valve stem 43b.

As has been described heretofore, according to the present invention, even in case where burrs are generated in the periphery of the opening portion of the stem hole and in the traces of the pouring gates, there is eliminated a fear that the burrs can be curved by the guide pin and can be thereby turned toward the stem hole side, thereby being able to secure the sliding performance of the valve stem. Therefore, it is also possible to omit the operation for removing the burrs generated in the periphery of the opening portion of the stem hole and in the pouring gates traces. Also, since the burrs left in the pouring gates traces are present at positions spaced apart from the opening portion of the stem hole, there is no possibility that the burrs in the pouring gates traces can impair the sliding performance of the valve stem.

## Claims

1. A resin piston (1) for a center-valve-type hydraulic master cylinder,
wherein the piston (1) when in use is movably inserted into a cylinder hole (4) of a hydraulic master cylinder and defines a hydraulic pressure chamber (34) in the cylinder hole (4), in the middle portion of which a guide hole (16) penetrating through the piston middle portion (13) in the radial direction thereof is formed,
wherein, when the resin piston (1) is in use, a guide pin (5) disposed so as to cross the cylinder hole (4) is inserted into the guide hole (16), a valve storage hole (18) is formed on the hydraulic pressure chamber side of the piston (1) so as to penetrate therethrough in the axial direction thereof, and, when the resin piston (1) is in use, the hydraulic pressure chamber (34) and the guide hole (16) are allowed to communicate with each other through the valve storage hole (18),
**characterized in that**
on the hydraulic pressure chamber side of the guide hole (16), a recessed groove (17) having a width smaller than the radius of the guide pin (5) so as to extend in the radial direction of the piston (1) is formed, and
the valve storage hole (18) is opened in the hydraulic-pressure-chamber-side surface of the recessed groove (17).

2. The resin piston (1) for the center-valve-type hydraulic master cylinder as set forth in Claim 1, wherein a pouring gate remains (B1, B2) for molten resin is disposed in the recessed groove (17) so as to be spaced from the valve storage hole (18).

3. A molding die (20) for the resin piston for the center-valve-type hydraulic master cylinder as set forth in claim 1, wherein the valve storage hole (18) is formed by using a valve storage hole molding core (24), and the leading end of the core (24) is disposed so as to project into the hydraulic-pressure-chamber-side surface of the recessed groove (17) in the molding time of the piston (1).

4. The molding die (20) for the resin piston (1) for the center-valve-type hydraulic master cylinder as set forth in claim 3, wherein a leading end of the valve storage hole molding core (24) is disposed so as to project into a guide hole molding core (21a, 22a) forming the guide hole (16).

5. The molding die (20) for a resin piston (1) for a center-valve-type hydraulic master cylinder as set forth in Claim 3, wherein a pouring gate (G1, G2) is disposed in a molding mold so as to be spaced from the valve storage hole (18) opened in the hydraulic-pressure-chamber-side surface of the recessed groove (17).

## Patentansprüche

1. Kunstharzkolben (1) für einen hydraulischen Masterzylinder mit Zentralventil,
wobei der Kolben (1) in der Verwendung beweglich in eine Zylinderbohrung (4) eines hydraulischen Masterzylinders eingesetzt ist und eine hydraulische Druckkammer (34) in der Zylinderbohrung (4) definiert, in deren mittlerem Bereich eine Führungsöffnung (16) ausgebildet ist, die durch den mittleren Bereich (13) des Kolbens in dessen radialer Richtung hindurchtritt,
wobei, wenn der Kunstharzkolben (1) verwendet wird, ein Führungsstift (5), der so vorgesehen ist, dass er die Zylinderbohrung (4) durchquert, in die Führungsöffnung (16) eingesetzt ist, eine Ventilaufbewahrungsöffnung (18) auf der Seite des Kolbens (1) ausgebildet ist, auf der sich die Hydraulikdruckkammer befindet, so dass sie dort hindurch in der axialen Richtung tritt, und, wenn der Kunstharzkolben (1) verwendet wird, die Hydraulikdruckkammer (34) und die Führungsöffnung (16) miteinander durch die Ventilaufbewahrungsöffnung (18) kommunizieren können,
**dadurch gekennzeichnet, dass**
auf der Seite der Führungsöffnung (16), auf der sich die Hydraulikdruckkammer befindet, eine Ausnehmungsnut (17) mit einer Breite ausgebildet ist, die geringer ist als der Radius des Führungsstifts (5), so dass sie sich in der radialen Richtung des Kolbens (1) erstreckt, und
die Ventilaufbewahrungsöffnung (18) sich in der Oberfläche der Ausnehmungsnut (17) öffnet, die sich auf der Seite der Hydraulikkammer befindet.

2. Kunstharzkolben (1) nach Anspruch 1, bei welchem ein Gießtor-Überbleibsel (B1, B2) für geschmolzenes Kunstharz in der Ausnehmungsnut (17) so vorgesehen ist, dass es von der Ventilaufbewahrungsöffnung (18) beabstandet ist.

3. Gießform (20) für den Kunstharzkolben nach Anspruch 1, wobei die Ventilaufbewahrungsöffnung (18) unter Verwendung eines Gießkerns (24) für die Ventilaufbewahrungsöffnung gebildet wird und das vorderen Ende des Kerns (24) so vorgesehen ist, dass es in die Oberfläche der ausgenommenen Nut (17) auf der Seite der Hydraulikdruckkammer beim Gießen des Kolbens (1) hervorsteht.

4. Gießform (20) nach Anspruch 3, bei welcher ein vorderes Ende des Gießkerns (24) für die Ventilaufbewahrungsöffnung so vorgesehen ist, dass es in einen Gießkern (21a, 22a) hervorsteht, der die Führungsöffnung (16) bildet.

5. Gießform (20) nach Anspruch 3, bei welcher ein Gießtor (G1, G2) in einer Gussform so vorgesehen ist, dass es von der Ventilaufbewahrungsöffnung (18) beabstandet ist, die sich in der Oberfläche der ausgenommenen Nut (17) auf der Seite der Hydraulikdruckkammer öffnet.

## Revendications

1. Piston en résine (1) pour un maître-cylindre hydraulique du type à soupape centrale,
dans lequel le piston (1), lorsqu'il est en fonctionnement, est inséré de manière mobile dans un trou de cylindre (4) d'un maître-cylindre hydraulique et définit une chambre de pression hydraulique (34) dans le trou de cylindre (4), à la partie du milieu duquel un trou de guidage (16) qui pénètre dans la partie du milieu du piston (13) dans la direction radiale de celui-ci est formé,
dans lequel, lorsque le piston en résine (1) est en fonctionnement, une broche de guidage (5) disposée de sorte à croiser le trou de cylindre (4) est insérée dans le trou de guidage (16), un trou de stockage de soupape (18) est formé du côté de la chambre de pression hydraulique du piston (1) de sorte à pénétrer à travers elle dans la direction axiale de celle-là et, lorsque le piston en résine (1) est en fonctionnement, la chambre de pression hydraulique (34) et le trou de guidage (16) sont autorisés à communiquer l'un avec l'autre à travers le trou de stockage de soupape (18),
**caractérisé en ce que**
du côté de la chambre de pression hydraulique du trou de guidage (16), une rainure encastrée (17), qui a une largeur plus petite que le rayon de la broche de guidage (5) de sorte à s'étendre dans la direction radiale du piston (1), est formée et
le trou de stockage de soupape (18) est formé sur la surface de la rainure encastrée (17) du côté de la chambre de pression hydraulique.

2. Piston en résine (1) pour le maître-cylindre hydraulique du type à soupape centrale comme exposé dans la revendication 1, dans lequel des restes de trou de coulée (B1, B2) de la résine en fusion sont disposés dans la rainure encastrée (17) de sorte à être espacés du trou de stockage de soupape (18).

3. Matrice de moulage (20) du piston en résine pour le maître-cylindre hydraulique du type à soupape centrale comme exposé dans la revendication 1, dans laquelle le trou de stockage de soupape (18) est formé en utilisant un noyau qui moule le trou de stockage de soupape (24) et l'extrémité principale du noyau (24) est disposée de sorte à faire saillie à la surface de la rainure encastrée (17), du côté de la chambre de pression hydraulique, pendant le temps de moulage du piston (1).

4. Matrice de moulage (20) du piston en résine (1) pour le maître-cylindre hydraulique du type à soupape centrale comme exposé dans la revendication 3, dans laquelle une extrémité principale du noyau qui moule le trou de stockage de soupape (24) est disposée de sorte à faire saillie dans un noyau qui moule le trou de guidage (21a, 22a) formant le trou de guidage (16).

5. Matrice de moulage (20) d'un piston en résine (1) pour un maître-cylindre hydraulique du type à soupape centrale comme exposé dans la revendication 3, dans laquelle un trou de coulée (G1, G2) est disposé dans un moule de moulage de sorte à être espacé du trou de stockage de soupape (18) ouvert sur la surface de la rainure encastrée (17) du côté de la chambre de pression hydraulique.
